# EUROPEAN PATENT APPLICATION

(11) **EP 3 244 361 A1**
(43) Date of publication of application: **15.11.2017**
(21) Application number: 17168037.4
(22) Date of filing: 25.04.2017
(51) Int. Cl.: G06Q 20/38, G06Q 20/20

(54) **A CROSS-CURRENCY PAYMENT METHOD AND SYSTEM**

(30) Priority: 26.04.2016 HK 16104763; 26.08.2016 GB 201614576
(71) Applicant: Olea, Ovidiu, New Territories (HK)
(72) Inventor: Olea, Ovidiu, New Territories (HK)
(74) Representative: Walker, Ross Thomson

(57) **Abstract**

A cross-currency payment method is provided and the method comprises: when a payer selects a currency from a number of various currencies to complete a transaction with a provider on an interface of a processing system, the processing system sends a payment information to a sale terminal; according to the payment information, the sale terminal uses the currency selected by the payer to complete the transaction and the processing system sends a payment request for requesting an amount of the selected currency to an acquiring system; the acquiring system transmits the payment request to an issuing system; when receiving the payment request, the issuing system transmits the amount of the selected currency to the acquiring system; when the acquiring system receives the amount of the selected currency, the acquiring system sends a currency conversion request to the processing system; according to the currency conversion request, the processing system converts the amount of the selected currency to an equivalent amount of a cuccrency preferred by the provider; and the acquiring system transmits the equivalent amount of the cuccrency preferred by the provider to the provider. A cross-currency payment system is also provided here. The present application realizes a cross-currency payment by the processing system. The currency conversion between different currencies is completed in the processing system. The payer can select the currency used for the payment and can know the amount of the payment in time.

## Description

### TECHNICAL FIELD

The present application relates to the field of financial services, and more particularly relates to a cross-currency payment method and system.

### BACKGROUND OF THE APPLICATION

With the continuous development of economic globalization, cross-currency payments have become a frequent occurrence encountered by both the individual and businesses. When a payer makes a purchase abroad, for example, a payer holding a payment device issued in GBP needs to pay for services or goods denominated in JPY in Japan, the payment will involve the currency conversion. At present, the third party at the top of the currency conversion is likely to benefit the difference. Besides, the currently used processes for currency conversion support neither the businesses nor the consumer.

In the current use of cross-currency payment methods, the common currency exchange is conducted either by the issuing financial institution system or by the scheme regulating the payment device mechanism. In the case of payment cards, the business firstly swipes the payment card through a transaction terminal, such as a POS machine, to send a payment authorization request to the acquiring system; then the acquiring system communicates with the payment card mechanism; the payment card mechanism converts the JPY into GBP according to the currency conversion rate from different banks and that conversion rate regularly includes an added mark-up or margin on top of the prevailing rates obtainable at the time of conversion from reputable foreign exchange marketplaces - the payer bears the cost of this currency conversion by being subjected to any mark-up charged by the payment card system; the payment card mechanism requests the issuing financial institution system for the converted GBP amount; the issuing financial institution system authorizes the cardholder to use the payment card abroad; then the issuing financial institution system sends the GBP amount to the payment card mechanism; the payment card mechanism sends the GBP amount to the acquiring system; the acquiring system converts the GBP amount to JPY in order to pay the provider of goods and services. The conversion from GBP to JPY performed by the acquiring system will also regularly contain an added mark-up or margin on top of the prevailing rates obtainable at the time of conversion from reputable foreign exchange marketplaces. The merchant bears the cost of this currency conversion by being subjected to any mark-up charged by the acquiring system.

In addition to the traditional model described above, there are currently in the market services commonly referred to as "dynamic currency conversion". Providers of dynamic currency conversion supply a choice to the cardholder to choose a currency for payment at the point of purchase. However, in order to be effective, dynamic currency conversion services rely on the provider of goods or services to first read the payer's payment device (such as by exposing a payment device to an electronic reader, commonly referred to in the industry as a "terminal") before being able to provide currency conversion services.

### SUMMARY OF THE APPLICATION

The objective of the present application is to provide a cross-currency payment method and system, aiming to resolve the above-mentioned inefficiencies. The proposed cross-currency method and system will also provide visibility and control of the foreign exchange conversions involved in payments of this nature.

The technical solutions of the present application for solving the technical problems are as follows:
a cross-currency payment method, wherein comprising:
   when a payer selects a currency from a number of various currencies to complete a transaction with a provider on an interface of a processing system, the processing system sends a payment information to a sale terminal;
   according to the payment information, the sale terminal uses the currency selected by the payer to complete the transaction and the processing system sends a payment request for requesting an amount of the selected currency to an acquiring system;
   the acquiring system transmits the payment request to an issuing system;
   when receiving the payment request, the issuing system transmits the amount of the selected currency to the acquiring system;
   when the acquiring system receives the amount of the selected currency, the acquiring system sends a currency conversion request to the processing system;
   according to the currency conversion request, the processing system converts the amount of the selected currency to an equivalent amount of a currency preferred by the provider; and
   the acquiring system transmits the equivalent amount of the cuccrency preferred by the provider to the provider.

In the cross-currency payment method of the present application, before the payer selects the currency from a number of various currencies to complete the transaction, the method further comprising:
getting most recently available real-time foreign exchange rates;
according to the most recently available real-time foreign exchange rates, the processing system converts an amount of money payable into a number of various currencies;
displaying a number of various currencies on the interface of the processing system for the payer to select.

In the cross-currency payment method of the present application, the processing system also displays the exchange rates used and commissions producing by the conversion.

In the cross-currency payment method of the present application, the foreign exchange rates can be provided by a foreign exchange rate provider, or can be obtained directly from reputable foreign exchange marketplaces.

In the cross-currency payment method of the present application, the acquiring system communicates with the issuing system via a payment scheme mechanism.

A cross-currency payment system is also provided, wherein, comprising:
a processing system configured to send a payment information to a sale terminal when a payer selects a currency from a number of various currencies to complete a transaction with a provider on an interface of the processing system and send a payment request for requesting an amount of the selected currency to an acquiring system according to the payment information;
the acquiring system configured to transmit the payment request to an issuing system;
the issuing financial institution system configured to transmit the amount of the selected currency to the acquiring system;
the acquiring system is further configured to send a currency conversion request to the processing system when the acquiring system receives the amount of the selected currency;
the processing system is further configured to convert the amount of the selected currency to an equivalent amount of a currency preferred by the provider according to the currency conversion request;
the acquiring system is further configured to transmit the equivalent amount of the currency preferred by the provider to the provider.

In the cross-currency payment system of the present application, the processing system comprises:
a getting module configured to get most recently available real-time foreign exchange rates;
a converting module configured to convert an amount of money payable into a number of various currencies according to the most recently available real-time foreign exchange rates ;
a display module configured to display a number of various currencies on the interface of the processing system for the payer to select.

In the cross-currency payment system of the present application, the exchange rates used and commissions producing by the convertion are also displayed on the display module.

In the cross-currency payment system of the present application, the foreign exchange rates can be provided by a foreign exchange rate provider, or can be obtained directly from reputable foreign exchange marketplaces.

In the cross-currency payment system of the present application, the acquiring system communicates with the issuing system via a payment scheme mechanism.

In summary, when implementing cross-currency payment method and system of the present application, the following advantageous effects can be achieved: by the processing system realizing the cross-currency payment, the currency conversion between different currencies is completed in the processing system, neither in the payment scheme mechanism nor in the issuing system; meantime, by the processing system, the payer can select the currency used for the payment and can know the amount of the payment in time.

### BRIEF DESCRIPTION OF THE DRAWINGS

The present application will be further described with reference to the accompanying drawings and embodiments in the following, in the accompanying drawings:
Fig.1 is a flow chart of a cross-currency payment method, according to a preferred embodiment of the present application.
Fig.2 is a structure diagram of a cross-currency payment system, according to a preferred embodiment of the present application.

### DETAILED DESCRIPTION OF THE PREFERRED EMBODIMENT

To make the technical feature, objective and effect of the present application be understood more clearly, now the specific implementation of the present application is described in detail with reference to the accompanying drawings and embodiments. It should be understood that the specific embodiments described herein are only used to explain the present application and are not intended to limit the present application.

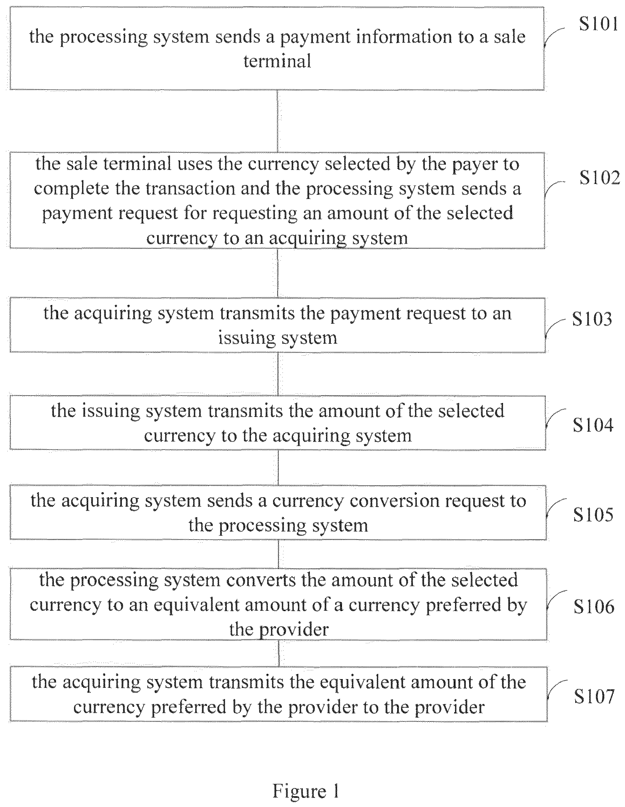

As shown in Fig.1, a flow chart of a cross-currency payment method. Using this method, the payer can use the payment card that he holds to complete the payment in the first currency issuing country, wherein the issuing country that issues the payment card is different from the first currency issuing country. Moreover, the issuing country that issues the payment card issues a second currency. The payment card could be a credit card, a debit card or other form of payment cards. Of course, in addition to the payment card, other devices may be used to complete the payment. The cross-currency payment method comprises:
Step S101: when a payer selects a currency from a number of various currencies to complete a transaction with a provider on an interface of a processing system, the processing system sends a payment information to a sale terminal.

In step S101, when the payer needs to pay for the goods or services, when the payer has performed their currency selection, the system passes the information regarding the amount and currency selected by the payer to point of sale terminal.

Before the payer selects the currency from a number of various currencies to complete the transaction, the method further comprising:
Getting most recently available real-time foreign exchange rates;
in this step, when a total amount for goods or services has been presented to the payer, the processing system sends a request to get the most recently available real-time foreign exchange rates. Further, the foreign exchange rate can be a rate derived at by proprietary means by the foreign exchange rate provider, or it can be a variation of a rate obtained directly from reputable foreign exchange marketplaces.

According to the most recently available real-time foreign exchange rates, the processing system converts an amount of money payable into a number of various currencies;
Displaying a number of various currencies on the interface of the processing system for the payer to select.
in this step, in addition to the converted amounts, the processing system also displays the exchange rates used and commissions producing by the convertion. Further, the information displayed by the system can be accessed by the payer on a device separate from the sale terminal, or the processing system can be integrated electronically and physically with sale terminals.

Step S102: according to the payment information, the sale terminal uses the currency selected by the payer to complete the transaction and the processing system sends a payment request for requesting an amount of the selected currency to an acquiring system;

In the step S102, when the amount and currency information have reached the sale terminal, the provider of goods and services then completes the transaction with the payer by using the payer's choice of payment. When the payer has completed the transaction, the processing system sends a payment request for requesting an amount of the selected currency to the acquiring system.

The processing system can communicate with the acquiring system that provide service for the goods and serves provider through the communication network, for example, the Internet, the telephone network or other networks, thus the processing system sends the payment request to the acquiring system.

The acquiring system can be one with a "payment device present" licence but also can be one with "payment device not present" licence, which are usually the online acquirers that support merchants who sell goods and services online.

Step S103: the acquiring system transmits the payment request to an issuing system;

In the step S103, the payment request is transmitted by the acquiring system to the issuing system for eventual settlement. Specifically, the acquiring system communicates with the issuing system via a payment scheme mechanism..

The payment scheme mechanism comprises Visa/MasterCard/China UnionPay. The acquiring system and the issuing system can communicate with the payment scheme mechanism through the communication network, for example, the Internet, the telephone network or other networks.

Step S104: when receiving the payment request, the issuing system transmits the amount of the selected currency to the acquiring system;

In the step S104, the issuing system receives the request for the amount in the currency of the choice of the payer, and transmits the amount in the currency originally chosen by the payer at the point of purchase to the acquiring system, via the payment scheme mechanism if required. The issuing system does not perform a currency conversion.

Step S105: when the acquiring system receives the amount of the selected currency, the acquiring system sends a currency conversion request to the processing system.

In the step S105, the acquiring system receives the amount in the currency originally chosen by the payer at the point of purchase and sends a currency conversion request to the processing system, thus it does not perform a currency conversion.

Step S106: according to the currency conversion request, the processing system converts the amount of the selected currency to an equivalent amount of a cuccrency preferred by the provider.

In the step S106, the processing system demands the amount in the currency originally chosen by the payer at the point of purchase and converts an equivalent amount in the currency preferred by the provider of goods and services to the acquiring system

Step S107: the acquiring system transmits the equivalent amount of the cuccrency preferred by the provider to the provider.

In the step S107, the acquiring system transmits to the provider of goods and services the equivalent amount in the preferred currency of the provider of goods and services.

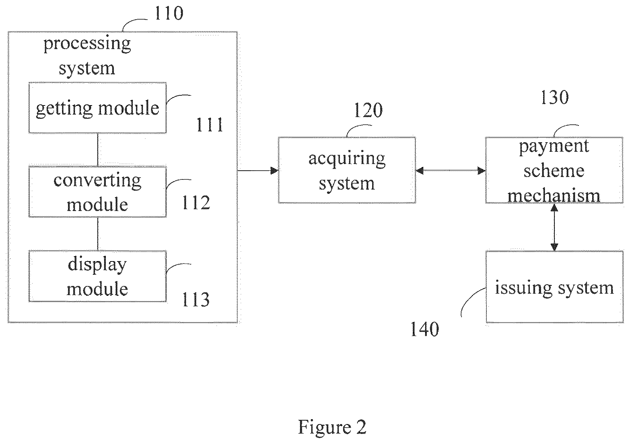

As shown in Fig.2, a structure diagram of a cross-currency payment system, according to a preferred embodiment of the present application. The cross-currency payment system 100 comprises a processing system 110, an acquiring system 120, a payment scheme mechanism 130 and an issuing system 140. The processing system 110, the acquiring system 120, the payment scheme mechanism 130 and the issuing system 140 are successfully connected and communicate with each other through the communication network, for example, internet, telephone network or other network.

The processing system 110 is configured to send a payment information to a sale terminal when a payer selects a currency from a number of various currencies to complete a transaction with a provider on an interface of the processing system and send a payment request for requesting an amount of the selected currency to an acquiring system 120 according to the payment information.

Further, the processing system 110 comprises a getting module 111, a converting module 112 and a display module 113. Wherein, the getting module 111 is configured to get most recently available real-time foreign exchange rates; the converting module 112 is connected with the getting module 111 and is configured to convert an amount of money payable into a number of various currencies according to the most recently available real-time foreign exchange rates, and the foreign exchange rates can be provided by a foreign exchange rate provider, or can be obtained directly from reputable foreign exchange marketplaces; the display module 113 is connected to the converting module 112 and is configured to display a number of various currencies on the interface of the processing system for the payer to select, and the exchange rates used and commissions producing by the convertion are also displayed on the display module.

The acquiring system 120 is configured to transmit the payment request to an issuing system via the payment scheme mechanism 130.

The issuing system 140 is configured to transmit the amount of the selected currency to the acquiring system via the payment scheme mechanism 130.

The acquiring system 120 is further configured to send a currency conversion request to the processing system when the acquiring system receives the amount of the selected currency.

The processing system 110 is further configured to convert the amount of the selected currency to an equivalent amount of a cuccrency preferred by the provider according to the currency conversion request;

The acquiring system 120 is further configured to transmit the equivalent amount of the currency preferred by the provider to the provider.

In summary, the cross-currency payment method and system of the present application realizes a cross-currency payment by the processing system. The currency conversion between different currencies is completed in the processing system, neither in the payment scheme mechanism nor in the issuing system; meantime, by the processing system, the payer can select the currency used for the payment and can know the amount of the payment in time.

While the embodiments of the present application are described with reference to the accompanying drawings above, the present application is not limited to the above-mentioned specific implementations. In fact, the above-mentioned specific implementations are intended to be exemplary not to be limiting. In the inspiration of the present application, those ordinary skills in the art can also make many modifications without breaking away from the subject of the present application and the protection scope of the claims. All these modifications belong to the protection of the present application.

## Claims

1. A cross-currency payment method, wherein, comprising:
when a payer selects a currency from a number of various currencies to complete a transaction with a provider on an interface of a processing system, the processing system sends a payment information to a sale terminal;
according to the payment information, the sale terminal uses the currency selected by the payer to complete the transaction and the processing system sends a payment request for requesting an amount of the selected currency to an acquiring system;
the acquiring system transmits the payment request to an issuing system;
when receiving the payment request, the issuing system transmits the amount of the selected currency to the acquiring system;
when the acquiring system receives the amount of the selected currency, the acquiring system sends a currency conversion request to the processing system;
according to the currency conversion request, the processing system converts the amount of the selected currency to an equivalent amount of a cuccrency preferred by the provider; and
the acquiring system transmits the equivalent amount of the cuccrency preferred by the provider to the provider.

2. The cross-currency payment method according to claim 1, wherein, before the payer selects the currency from a number of various currencies to complete the transaction, the method further comprising:
getting most recently available real-time foreign exchange rates;
according to the most recently available real-time foreign exchange rates, the processing system converts an amount of money payable into a number of various currencies;
displaying a number of various currencies on the interface of the processing system for the payer to select.

3. The cross-currency payment method according to claim 2, wherein, the processing system also displays the exchange rates used and commissions producing by the convertion.

4. The cross-currency payment method according to claim 2, wherein, the foreign exchange rates can be provided by a foreign exchange rate provider, or can be obtained directly from reputable foreign exchange marketplaces.

5. The cross-currency payment method according to claim 1 or any one of the preceding claims, wherein, the acquiring system communicates with the issuing system via a payment scheme mechanism.

6. A cross-currency payment system, wherein, comprising:
a processing system configured to send a payment information to a sale terminal when a payer selects a currency from a number of various currencies to complete a transaction with a provider on an interface of the processing system and send a payment request for requesting an amount of the selected currency to an acquiring system according to the payment information;
the acquiring system configured to transmit the payment request to an issuing system;
the issuing financial institution system configured to transmit the amount of the selected currency to the acquiring system;
the acquiring system is further configured to send a currency conversion request to the processing system when the acquiring system receives the amount of the selected currency;
the processing system is further configured to convert the amount of the selected currency to an equivalent amount of a currency preferred by the provider according to the currency conversion request;
the acquiring system is further configured to transmit the equivalent amount of the cuccrency preferred by the provider to the provider.

7. The cross-currency payment system according to claim 6, wherein, the processing system comprises:
a getting module configured to get most recently available real-time foreign exchange rates;
a converting module configured to convert an amount of money payable into a number of various currencies according to the most recently available real-time foreign exchange rates ;
a display module configured to display a number of various currencies on the interface of the processing system for the payer to select.

8. The cross-currency payment system according to claim 7, wherein, the exchange rates used and commissions producing by the convertion are also displayed on the display module.

9. The cross-currency payment system according to claim 7, wherein, the foreign exchange rates can be provided by a foreign exchange rate provider, or can be obtained directly from reputable foreign exchange marketplaces.

10. The cross-currency payment system according to claim 6 or any one of the preceding claims, wherein, the acquiring system communicates with the issuing system via a payment scheme mechanism.
